# EUROPÄISCHE PATENTANMELDUNG

(11) **EP 2 261 084 A1**
(43) Veröffentlichungstag der Anmeldung: **15.12.2010**
(21) Anmeldenummer: 10159119.6
(22) Anmeldetag: 06.04.2010
(51) Int. Cl.: B60Q 1/48, G01S 7/41, B60W 50/08, B62D 15/02

(54) **Verfahren und Steuergerät zur Lokalisierung einer Parklücke für ein Fahrzeug**

(30) Priorität: 04.06.2009 DE 102009026730
(71) Anmelder: Robert Bosch GmbH, 70442 Stuttgart (DE)
(72) Erfinder: Schneider, Marcus, 71642, Ludwigsburg (DE); Niemz, Volker, 71277, Rutesheim (DE)

(57) **Zusammenfassung**

Es wird ein Verfahren zur Lokalisierung einer Parklücke für ein Fahrzeug vorgeschlagen, das einen Schritt des Empfangens (102) eines Trigger-Signals umfasst, das von einem Fahrer des Fahrzeugs bereitgestellt werden kann. Ansprechend auf das Trigger-Signal erfolgt ein Empfangen (104) einer Information über einen ermittelten Parkraum. Durch Klassifizieren (106) des ermittelten Parkraums wird bestimmt, ob der ermittelte Parkraum ein tatsächlicher Parkraum, ein potentieller Parkraum oder ein ungeeigneter Parkraum ist, wobei ein tatsächlicher Parkraum eine für das Fahrzeug geeignete Parklücke kennzeichnet, der potentielle Parkraum eine für das Fahrzeug bedingt geeignete Parklücke kennzeichnet und der ungeeignete Parkraum eine für das Fahrzeug ungeeignete Parklücke kennzeichnet. Wenn der Parkraum entweder als tatsächlicher Parkraum oder als potentieller Parkraum klassifiziert wurde, erfolgt ein Bereitstellen (108) einer Information über die Parklücke.

## Beschreibung

### Stand der Technik

Die vorliegende Erfindung bezieht sich auf ein Verfahren gemäß Anspruch 1, ein Steuergerät gemäß Anspruch 11.

Aus der EP 1 533 181 A2 ist eine Vorrichtung zur semiautonomen Unterstützung des Einparkvorgangs bei Fahrzeugen bekannt. Die Vorrichtung weist eine Einrichtung zur Ermittlung der Größe einer Parklücke, eine Rechnereinheit, Mittel zur Erfassung der aktuellen Position des Fahrzeugs sowie einer Kommunikationseinrichtung auf, mit der einem Fahrzeuglenker Informationen oder Anweisungen über einen Einparkvorgang mitteilbar sind.

### Offenbarung der Erfindung

Vor diesem Hintergrund wird mit der vorliegenden Erfindung ein Verfahren zur Lokalisierung einer Parklücke für ein Fahrzeug und ein Steuergerät, das dieses Verfahren verwendet, gemäß den unabhängigen Patentansprüchen vorgestellt. Vorteilhafte Ausgestaltungen ergeben sich aus den jeweiligen Unteransprüchen und der nachfolgenden Beschreibung.

Der Kern der Erfindung besteht in einem individuellen triggern einer Parklücke durch den Fahrer. Anhand verschiedener Kriterien kann die Ausgabe einer Parklücke erzwungen werden, die beispielsweise im autonomen Betrieb nicht angeboten wird, um eine Fehllokalisation zu verhindern. Die individuelle Triggerung bzw. Lokalisierung einer Parklücke durch den Fahrer kann beispielsweise bei einem semi-autonomen Einparksystem eingesetzt werden.

Mögliche Kriterien bei denen eine Ausgabe einer Parklücke erzwungen werden können eine Fahrerinteraktion umfassen, bei der der Fahrer beispielsweise einen Knopf drückt. Dies kann unabhängig von Objekten in der Umwelt geschehen. Ferner kann ein Kriterium darin bestehen, dass eine externe Sensorik, z.B.: Video einen Parkraum erkennt, der nicht durch ein vorderes oder hinteres oder vorderes und hinteres Objekt begrenzt wird. Ferner ist eine Coming-Home-Funktion möglich, bei der mittels GPS erkannt wird, dass der Fahrer sich an seinem typischen Parkplatz befindet. Hier soll auch bei nicht 100% Lückendetektion ein Einparkvorgang angeboten werden. Auch kann eine Erkennung eines längeren Bordsteines in einer gewissen Entfernung als Kriterium eingesetzt werden, da dann kann davon ausgegangen werden kann, dass sich das Fahrzeug entlang mehrerer unbesetzter Parklücken bewegt.

Vorteilhafterweise müssen erfindungsgemäß keine festen Objektkonstellationen vorliegen, wie zum Beispiel, ein Objekt hinten und ein Objekt vorne, ein Objekt hinten und ein Bordstein mit einer vorbestimmten Mindestlänge X, ein Bordstein mit der Mindestlänge X und ein Objekt vorn und das die ObjekteFahrzeuge sein müssen oder runde Form aufweisen.

Erfindungsgemäß können je nach hinterlegten Regelsatz gewisse Kombination erlaubt werden. Somit können auch entartete Lösungen umgesetzt werden, wie sie oben beispielhaft genannt sind.

Vorteilhafterweise kann ein auf dem erfindungsgemäßen Verfahren basierender Einparkassistent die komplexe Aufgabe übernehmen, trotz hohen Verkehrsaufkommens schnell zu entscheiden, ob und wie ein Fahrzeug in eine gefundene Parklücke passt. Dadurch kann das alltägliche Fahrmanöver des Einparkens stark vereinfacht werden. Um eine potentielle Parklücke präzise klassifizieren zu können, kann eine geometrische und topografische Beschreibung der Parklücke genutzt werden.

Somit besteht der Vorteil der Erfindung in einer enormen Verbesserung der Nutzungsmöglichkeiten eines semiautonomen Einparksystems. Der Fahrer kann neben den autonomen detektierten Parklücken auch weitere Parklücken triggern, in die unterstützt eingeparkt werden kann. Neben den verbesserten Anwendungsmöglichkeiten, kann weiterhin die Sicherheit beim Agieren mit dem Fahrzeug im urbanen Umfeld optimiert werden.

Die vorliegende Erfindung schafft ein Verfahren zur Lokalisierung einer Parklücke für ein Fahrzeug in einem semi-autonomen Lokalisierungsmodus, das die folgenden Schritte aufweist: Empfangen eines Trigger-Signals über eine Schnittstelle, wobei das Trigger-Signal von einem Fahrer des Fahrzeugs bereitgestellt werden kann; Empfangen einer Information über einen ermittelten Parkraum über eine Schnittstelle, ansprechend auf das Trigger-Signal; Klassifizieren des ermittelten Parkraums, um zu bestimmen, ob der ermittelte Parkraum ein tatsächlicher Parkraum, ein potentieller Parkraum oder ein ungeeigneter Parkraum ist, wobei ein tatsächlicher Parkraum eine für das Fahrzeug geeignete Parklücke kennzeichnet, der potentielle Parkraum eine für das Fahrzeug bedingt geeignete Parklücke kennzeichnet und der ungeeignete Parkraum eine für das Fahrzeug ungeeignete Parklücke kennzeichnet; und Bereitstellen einer Information über die Parklücke, wenn der Parkraum entweder als tatsächlicher Parkraum oder als potentieller Parkraum klassifiziert wurde.

Semi-autonom kann hierbei bedeuten, dass das Verfahren unter Mitwirkung des Fahrers durchgeführt werden kann. Beispielsweise kann eine Durchführung des Verfahrens ansprechend auf das Trigger-Signal begonnen werden. Das Trigger-Signal kann durch den Fahrer ausgelöst werden, wenn sich das Fahrzeug nach Ansicht des Fahrers neben oder zumindest in der Nähe einer potentiellen Parklücke befindet. Die Information über den ermittelten Parkraum kann, angestoßen durch das Trigger-Signal, von einem bekannten Einparksystem ermittelt und bereitgestellt werden und Informationen über eine Position, eine Tiefe, Länge und/oder Freifläche des ermittelten Parkraums aufweisen. Insbesondere kann die Information über den ermittelten Parkraum alle erforderlichen Daten umfassen, die eine Entscheidung darüber ermöglichen, ob das Fahrzeug in den ermittelten Parkraum einparken kann. Dabei können sowohl die Fahrzeugabmessungen als auch die Rangiermöglichkeiten des Fahrzeugs in die Entscheidungsfindung mit einbezogen werden. Die Klassifizierung kann basierend auf vorbestimmten Regeln oder Mustern erfolgen. Die bereitgestellte Information über die Parklücke kann dem Fahrer angezeigt werden oder von einem bekannten Einparksystem genutzt werden, um einen Einparkvorgang des Fahrzeugs in die Parklücke durchzuführen oder zumindest zu unterstützen.

Gemäß einer Ausführungsform kann zur Lokalisierung der Parklücke in einem autonomen Lokalisierungsmodus das Bereitstellen der Information über die Parklücke erfolgen, wenn der Parkraum als tatsächlicher Parkraum klassifiziert wurde. Somit kann das Verfahren sowohl einen autonomen Lokalisierungsmodus als auch einen semi-autonomen Lokalisierungsmodus umfassen. In dem autonomen Lokalisierungsmodus kann die Lokalisierung der Parklücke ohne Mitwirkung des Fahrers erfolgen. Dabei können ausschließlich Parklücken angezeigt werden, die bei der Klassifizierung als geeignete Parklücke eingestuft werden. Wird ein ermittelter Parkraum als potentieller Parkraum oder als ungeeigneter Parkraum klassifiziert, so wird dieser Parkraum im autonomen Modus nicht als Parklücke angezeigt. In dem semi-autonomen Lokalisierungsmodus kann der Fahrer durch seine Mitwirkung eine Vorauswahl bezüglich des in Frage kommenden Parkraums treffen. Daher kann im semi-autonomen Lokalisierungsmodus auch eine Parklücke angezeigt werden, die nicht mit Sicherheit als geeignete Parklücke eingestuft werden kann.

Beispielsweise kann das Trigger-Signal ein Signal repräsentieren, dass durch eine Betätigung eines Schalters bereitgestellt wird. Der Schalter kann somit eine Schnittstelle zwischen dem Fahrer und einer Vorrichtung darstellen, die das erfindungsgemäße Verfahren ausführt.

Die Information über den ermittelten Parkraum kann eine Information repräsentieren, die von einer Vorrichtung zur Parklückenlokalisierung bereitgestellt wird. Somit kann das erfindungsgemäße Verfahren im Zusammenhang mit einem bekannten Einparkassistenten eingesetzt werden. Die Vorrichtung zur Parklückenlokalisierung kann den Parkraum beispielsweise mittels einer Echoanordnung vermessen.

Gemäß einer Ausführungsform kann zwischen einem Zeitpunkt des Empfangens des Trigger-Signals und einem Zeitpunkt des Bereitstellens der Information über die Parklücke eine vorbestimmte Zeitdauer liegen. Wird die vorbestimmte Zeitdauer klein gewählt, so kann gewährleistet werden, dass die Information über die Parklücke einer derjenigen Parklücke zugeordnet werden kann, die zum Zeitpunkt des Bereitstellens des Trigger-Signals neben oder zumindest in der Nähe des Fahrzeugs befindlich ist.

Beispielsweise können zum Zeitpunkt der Triggerung eine vorbestimmte Anzahl von letzten Metern analysiert werden und entsprechend ein Einparkvorgang angeboten werden. Alternativ können per Knopfdruck die Messungen und eine Pflichtausgabe getriggert werden. Das heißt es wird ab Triggerzeitpunkt eine Parklücke gesucht. Entspricht die Umwelt den Standardregeln für erlaubte Objektanordnungen kann wie aktuell in Serie ein Einparken angeboten werden. Sollte jedoch keine Standardszene vorliegen, z.B.: drei unbesetzte Parklücken in Folge, so kann entweder die Tiefeninformation, beispielsweise ein detektierter Bordstein, oder eine Standardtiefe angeboten werden. Die Ausgabe der Parklücke kann erfolgen sobald die "virtuell-getriggerte" Parklücke eine Mindestlänge besitzt bzw. bis sich das Fahrzeug eine definierte Strecke bewegt hat.

Die Information über den ermittelten Parkraum kann Daten über mindestens ein Objekt in einer Umgebung des Fahrzeugs umfassen. Bei dem Objekt kann es sich beispielsweise um einen Randstein, ein weiteres Fahrzeug oder allgemein um eine Parkraumbegrenzung handeln.

Gemäß einer Ausführungsform kann der ermittelte Parkraum als tatsächlicher Parkraum klassifiziert werden, wenn der ermittelte Parkraum mit einer ersten Wahrscheinlichkeit eine ausreichende Größe für das Fahrzeug umfasst, der ermittelte Parkraum als bedingt geeigneter Parkraum klassifiziert werden, wenn der ermittelte Parkraum mit einer zweiten Wahrscheinlichkeit eine ausreichende Größe für das Fahrzeug umfasst und bei dem der ermittelte Parkraum als ungeeigneter Parkraum klassifiziert werden kann, wenn der ermittelte Parkraum mit einer dritten Wahrscheinlichkeit eine ausreichende Größe für das Fahrzeug umfasst, wobei die erste Wahrscheinlichkeit größer als die zweite Wahrscheinlichkeit und die zweite Wahrscheinlichkeit größer als die dritte Wahrscheinlichkeit ist. Somit kann die Klassifizierung des ermittelten Parkraums davon abhängen, wie sicher die Parkraumbestimmung durchgeführt wurde.

Die Information über den ermittelten Parkraum kann eine Information über eine Tiefenreferenz und/oder ein parklückenbegrenzendes Objekt aufweisen und die Klassifizierung kann unter Einbeziehung der Information über die Tiefenreferenz und/oder der Information über das parklückenbegrenzende Objekts durchgeführt werden. Mittels der Tiefenreferenz oder alternativ mittels des parklückenbegrenzenden Objekts kann eine Größe des ermittelten Parkraums bestimmt werden. Die Tiefenreferenz kann dabei einen Abstand zwischen zwei oder mehreren Parkraum begrenzenden Objekten darstellen.

Dabei kann der ermittelte Parkraum als bedingt geeigneter Parkraum klassifiziert werden, wenn die Tiefenreferenz zumindest über eine vorbestimmte Länge einer vorbestimmten Tiefenreferenz entspricht. Die Tiefenreferenz kann beispielsweise einen Abstand zu einer Fahrbahnbegrenzung, beispielsweise einen Bordstein darstellen. Die vorbestimmte Tiefenreferenz kann eine Mindesttiefe angeben, die beispielsweise der Fahrzeugbreite entsprechen kann. Ist die ermittelte Tiefenreferenz größer oder gleich der vorbestimmten Tiefenreferenz, so kann die Parklücke als ausreichend tief angesehen werden. Die vorbestimmte Länge kann beispielsweise einer Länge des Fahrzeugs zuzüglich eines erforderlichen Rangierabstandes entsprechen. Die Länge kann parallel zu der Fahrtrichtung des Fahrzeugs gemessen werden und kann somit beispielsweise eine Länge eines freien Bordsteinabschnitts anzeigen. Ist beispielsweise die Länge des freien Bordsteinabschnitts gleich oder größer der vorbestimmten Länge, so kann die Parklücke als ausreichend breit angesehen werden. Insbesondere ist es nicht erforderlich, dass die Parklücke vorne und hinten durch ein Objekt begrenzt ist. Somit kann der ermittelte Parkraum auch dann als bedingt geeigneter Parkraum klassifiziert werden, wenn die Tiefenreferenz über eine Länge der vorbestimmten Tiefenreferenz entspricht, die größer als die vorbestimmte Länge ist. Dies ist beispielsweise der Fall, wenn das Fahrzeug an zwei oder mehreren, zusammenhängend unbesetzten Parklücken vorbeifährt.

Gemäß einer Ausführungsform kann die Information über den ermittelten Parkraum ansprechend auf das Trigger-Signal empfangen werden, wenn eine Positionsinformation anzeigt, dass sich das Fahrzeug an einem vorbestimmten Ort befindet. Die Positionsinformation kann eine von einem GPS-Gerät bereitgestellte Information repräsentieren, die über eine Schnittstelle empfangen werden kann. Bei dem vorbestimmten Ort kann es sich beispielsweise um eine gespeicherte Position eines möglichen Parkplatzes handeln.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:
- Fig. 1: ein Ablaufdiagramm eines Verfahrens gemäß einem Ausführungsbei- spiels der vorliegenden Erfindung;
- Fig. 2: eine schematische Darstellung eines Steuergeräts gemäß einem Aus- führungsbeispiels der vorliegenden Erfindung;
- Fig. 3: eine schematische Darstellung eines Einparkvorgangs gemäß einem Ausführungsbeispiels der vorliegenden Erfindung; und
- Fig. 4: eine schematische Darstellung eines Einparkvorgangs gemäß einem weiteren Ausführungsbeispiels der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

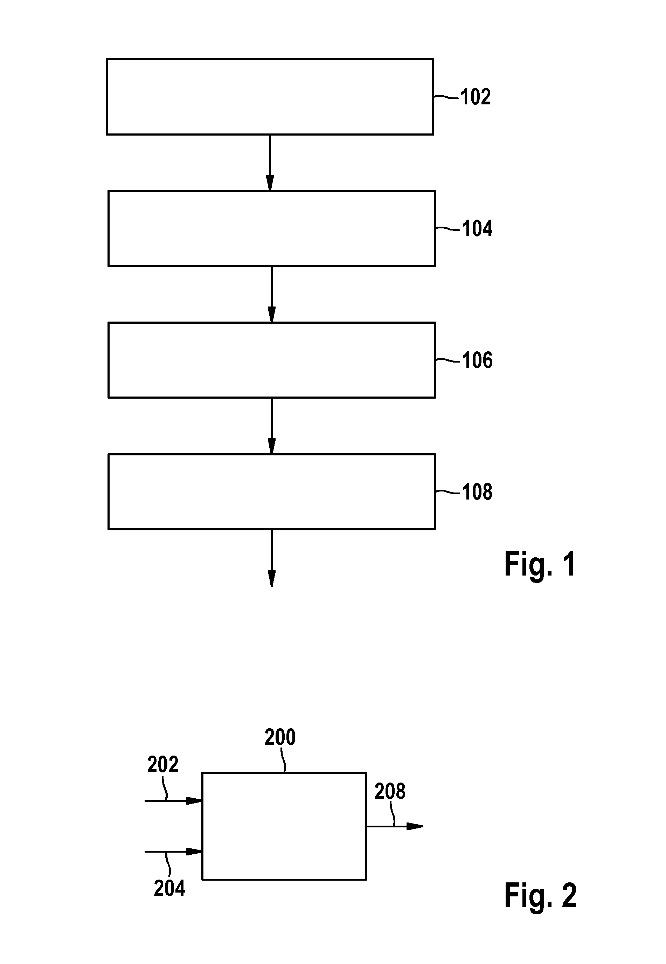

Fig. 1 zeigt ein Ablaufdiagramm eines Verfahrens zur Lokalisierung einer Parklücke für ein Fahrzeug, gemäß einem Ausführungsbeispiels der vorliegenden Erfindung. Erfindungsgemäß ist eine Lokalisierung einer Parklücke sowohl in einem semi-autonomen als auch in einem autonomen Lokalisierungsmodus möglich. Das Verfahren kann von einer Vorrichtung oder einem Steuergerät zur Lokalisierung einer Parklücke, beispielsweise in Form eines Einparkassistenten ausgeführt werden.

Der semi-autonome Lokalisierungsmodus kann mit einem Schritt 102 des Empfangens eines Trigger-Signals gestartet werden. Das Trigger-Signal kann über eine Schnittstelle empfangen werden. Das Trigger-Signal kann von einem Fahrer des Fahrzeugs ausgelöst werden, um den semi-autonome Lokalisierungsmodus zu starten. Ansprechend auf das Trigger-Signal kann eine Ermittlung eines Parkraums durchgeführt werden. Die Ermittlung des Parkraums kann mittels bekannter Detektionseinrichtungen und einer entsprechender Signalverarbeitung erfolgen. Beispielsweise kann dazu eine Echoanordnung eingesetzt werden. Insbesondere kann die Ermittlung des Parkraums unmittelbar nach Empfang des Trigger-Signals durchgeführt und abgeschlossen werden. Auf diese Weise kann eine Ermittlung eines Parkraums erzwungen werden, der sich zum Zeitpunkt der Bereitstellung des Trigger-Signals direkt neben oder zumindest in unmittelbarer Nähe des Fahrzeugs befindet. Somit kann durch den Fahrer, durch Auslösen des Trigger-Signals, bestimmt werden, welcher konkrete Parkraum als mögliche Parklücke untersucht werden soll.

Nach der Ermittlung des Parkraums erfolgt in einem Schritt 104 ein Empfangen einer Information über den ermittelten Parkraum. Die Information über den ermittelten Parkraum kann über eine Schnittstelle empfangen werden und Daten über eine Position und eine Größe des Parkraums aufweisen. Aus der Information über den ermittelten Parkraum kann bestimmt werden, ob der Parkraum als Parklücke für das Fahrzeug geeignet ist. Dabei kann auf gespeicherte charakteristische Daten des Fahrzeugs, wie z.B. dessen Abmessungen, zurückgegriffen werden.

Zur Bestimmung, in wie weit der ermittelte Parkraum als Parklücke geeignet ist, kann in einem Schritt 106 ein Klassifizieren des ermittelten Parkraums erfolgen. Beispielsweise kann der ermittelte Parkraum in einen tatsächlichen Parkraum, einen potentiellen Parkraum oder einen ungeeigneter Parkraum klassifiziert werden. Die Klassifizierung kann basierend auf einer vorbestimmten Klassifizierungsvorschrift erfolgen. Der ermittelte Parkraum kann als tatsächlicher Parkraum klassifiziert werden, wenn er gemäß der Klassifizierungsvorschrift als eine für das Fahrzeug geeignete Parklücke definiert wird. Der ermittelte Parkraum kann als potentieller Parkraum klassifiziert werden, wenn er gemäß der Klassifizierungsvorschrift nicht sicher als eine für das Fahrzeug geeignete Parklücke definiert werden kann. Dies kann beispielsweise aufgrund ungenauer Messungen oder unbekannter Muster detektierter Objekte der Fall sein. Ein potentieller Parkraum kann daher im rein autonomen Lokalisierungsmodus nicht als geeignete Parklücke angesehen werden. Bei dem potentiellen Parkraum besteht somit die Gefahr einer Fehllokalisierung. Der ungeeignete Parkraum stellt keine Parklücke für das Fahrzeug dar, beispielsweise aufgrund einer zu geringen Größe.

Nach der Klassifizierung kann in einem Schritt 108 ein Bereitstellen einer Information über die Parklücke erfolgen. Im semi-autonomen Lokalisierungsmodus kann die Information über die Parklücke erfolgen, wenn der Parkraum entweder als tatsächlicher Parkraum oder als potentieller Parkraum klassifiziert wurde. Die Information über die Parklücke kann dem Fahrer mitteilen, dass der von ihm durch Auslösen des Trigger-Signals untersuchte Parkraum eine geeignete Parklücke darstellt. Ferner kann die Information über die Parklücke von einem Einparkassistenten genutzt werden, um einen Einparkvorgang in die Parklücke zu beginnen oder zu unterstützen.

Im rein autonomen Betrieb kann im Schritt 108 die Information über die Parklücke ausschließlich dann bereitgestellt werden, wenn der Parkraum als tatsächlicher Parkraum erkannt wurde. Der rein autonome Betrieb kann beispielsweise durch ein weiteres Trigger-Signal gestartet werden. Im autonomen Betrieb kann sich die Ermittlung des Parkraums über einen längeren, nicht vorbestimmten Zeitraum hinziehen.

Fig. 2 zeigt eine schematische Darstellung eines Steuergeräts 200, das ausgebildet ist, um die Schritte des Verfahrens zur Lokalisierung einer Parklücke auszuführen.

Das Steuergerät 200 weist eine Schnittstelle zum Empfangen eines Trigger-Signals 202 und eine Schnittstelle zum Empfangen einer Information 204 über einen ermittelten Parkraum auf. Ferner weist das Steuergerät 200 eine Schnittstelle zum Bereitstellen einer Information 208 über die Parklücke auf. Um die Klassifizierung der Information 204 über den ermittelten Parkraum durchzuführen, kann das Steuergerät 200 eine entsprechende Logikeinheit oder Recheneinheit aufweisen.

Die Parklückenlokalisierung basiert auf umweltabbildenden Daten, die hinsichtlich verschiedener Regeln bzw. Muster klassifiziert werden. Dadurch kann garantiert werden, dass im automatischen Parklückensuchmodus nur diejenigen Parklücken angeboten werden, die tatsächlich echte Parklücken bzw. echten Parkraum darstellen. Das erfindungsgemäße Verfahren ermöglicht zusätzlich, dass der Fahrer auch in entarteten Situationen unterstützt werden kann.

Dies wird durch eine individuelle Triggerung von Parklücken ermöglicht. Die Triggerung kann beispielsweise durch einen speziellen Taster realisiert werden. Über den Taster kann der Fahrer einen direkten Anstoß zu unmittelbaren Ermittlung einer Parklücke geben.

Wird das erfindungsgemäße Verfahren mit einem rein autonomen Lokalisierungsmodus kombiniert, so kann der autonome Lokalisierungsmodus ebenfalls über den Taster oder über einen weiteren Taster aktiviert werden.

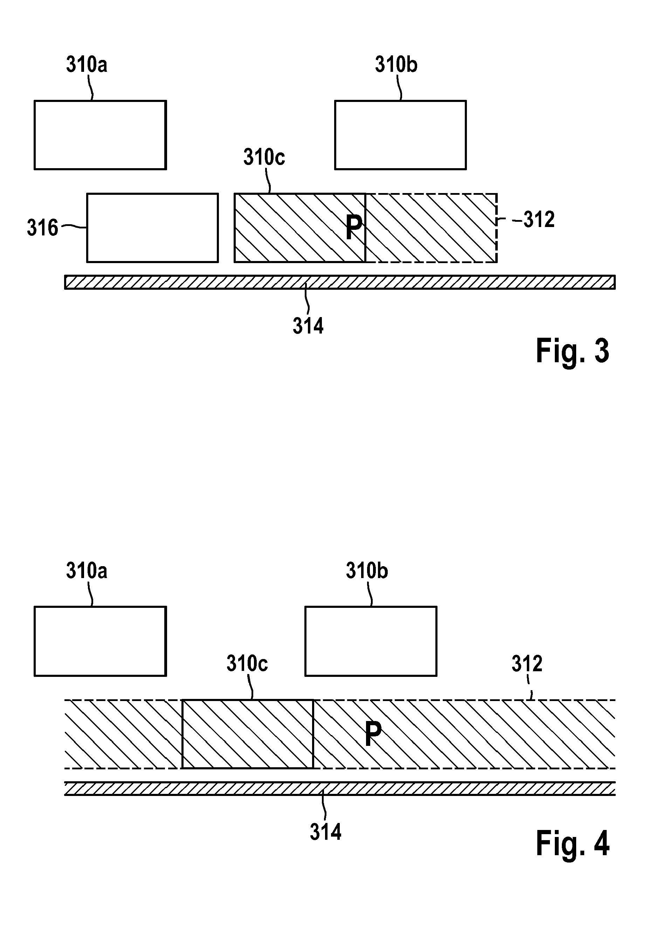

Fig. 3 zeigt einen Einparkvorgang eines Fahrzeugs in einer entarteten Szene. Ein solcher Einparkvorgang wird mittels des erfindungsgemäßen Verfahrens ermöglicht.

Ein Fahrzeug befindet sich in einer Position 310a. Ein Parkraum (P) 312 befindet sich in Fahrtrichtung gesehen rechts vor dem Fahrzeug, längs zu einer Begrenzung 314, beispielsweise einer Bordsteinkante und hinter einem Objekt 316, beispielsweise einem weiteren Fahrzeug. Somit wird ein möglicher Parkraum zum einen durch die Begrenzung 314 und zum anderen durch das Objekt 316 begrenzt.

Erkennt der Fahrer den möglichen Parkraum, so kann er mittels des erfindungsgemäßen Verfahrens überprüfen lassen, ob der mögliche Parkraum als Parklücke geeignet ist. Somit kann in der Position 310a des Fahrzeugs ein Registrieren der Situation und ein Triggern oder Auslösen der sofortigen Parklückenausgabe erfolgen. Sowohl das Registrieren als auch das Triggern kann durch den Fahrer erfolgen.

Nachfolgend hat das Fahrzeug die Position 310b eingenommen. Dies stellt eine erste mögliche Einparkposition für einen semi-autonomen Einparkassistenten dar. Die mögliche Einparkposition kann durch das Klassifizieren des möglichen Parkraums überprüft oder festgestellt worden sein. Somit kann ein Anbieten der Parklücke erfolgen.

Die Position 310c des Fahrzeugs stellt ein Erreichen der endgültigen Einparkposition dar. Das Fahrzeug befindet sich in der Position 310c in der erkannten Parklücke, angrenzend zu der Begrenzung 314 und dem Objekt 316. Der Einparkvorgang selber kann von einem Einparkassistenten unterstützt oder durchgeführt worden sein.

Fig. 4 zeigt einen Einparkvorgang eines Fahrzeugs in einer weiteren entarteten Szene, der mittels des erfindungsgemäßen Verfahrens ermöglicht wird.

Das Fahrzeug befindet sich zu Beginn wieder in der Position 310a. Ein Parkraum P 312 befindet sich in Fahrtrichtung rechter Hand vor dem Fahrzeug, längs zu der Begrenzung 314.

In der Position 310a kann das Registrieren der Situation und Triggern oder Auslösen der sofortigen Parklückenausgabe durchgeführt werden.

Nachfolgend hat das Fahrzeug die Position 310b eingenommen. Dies stellt die erste mögliche Einparkposition für den semi-autonomen Einparkassistenten dar. Somit kann das Anbieten der Parklücke erfolgen.

Die Position 310c des Fahrzeugs stellt ein Erreichen der endgültigen Einparkposition dar. Das Fahrzeug befindet sich in der Position 310c in einer Parklücke innerhalb des Parkraums 312, angrenzend zu der Begrenzung 314.

Die individuelle Triggerung kann bewirken, dass immer dann eine Parklücke ausgegeben wird, sobald entweder eine entsprechende Tiefenreferenz sowie ein zur Verfügung stehender Parkraum, wie in Fig. 3 gezeigt, oder ein beliebiges hinteres parklückenbegrenzendes Objekt sowie ein zur Verfügung stehender Parkraum, wie in Fig. 2 gezeigt, detektiert wurde. Dabei werden Objekte sowie Tiefenreferenzen, welche aus verschiedenen Gründen, wie z.B. der Signalqualität, Rauschen, etc. im automatischen Parklückensuchmodus herausgefiltert werden trotzdem verwendet.

Nachdem ein Parkmanöver getriggert wurde, könnte auch eine Standardtrajektorie verwendet werden. Das heißt es kann eine Standardtiefe verwendet werden.

Gründe für ein verwerfen der Daten im "Normal-Modus" wären Objektabrisse, die zum Beispiel durch schlechte Reflexionseigenschaften von Bordsteinen resultieren können. Weitere Möglichkeiten wären nicht regelkonforme Objektanordnungen. Weitere Gründe für das filtern von Daten besteht in starken Schwankungen der detektierten Abstände, etc.

Dadurch kann dem Fahrerwunsch entsprechend jegliche Parklücke angeboten werden, die selbständig getriggert wurde.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt ausgeführt werden.

Umfasst ein Ausführungsbeispiel eine "und/oder" Verknüpfung zwischen einem ersten Merkmal und einem zweites Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zur Lokalisierung einer Parklücke für ein Fahrzeug in einem semi-autonomen Lokalisierungsmodus, das die folgenden Schritte aufweist:
Empfangen (102) eines Trigger-Signals (202) über eine Schnittstelle, wobei das Trigger-Signal von einem Fahrer des Fahrzeugs bereitgestellt werden kann;
Empfangen (104) einer Information (204) über einen ermittelten Parkraum (310) über eine Schnittstelle, ansprechend auf das Trigger-Signal;
Klassifizieren (106) des ermittelten Parkraums, um zu bestimmen, ob der ermittelte Parkraum ein tatsächlicher Parkraum, ein potentieller Parkraum oder ein ungeeigneter Parkraum ist, wobei ein tatsächlicher Parkraum eine für das Fahrzeug geeignete Parklücke kennzeichnet, der potentielle Parkraum eine für das Fahrzeug bedingt geeignete Parklücke kennzeichnet und der ungeeignete Parkraum eine für das Fahrzeug ungeeignete Parklücke kennzeichnet; und
Bereitstellen (108) einer Information (208) über die Parklücke, wenn der Parkraum entweder als tatsächlicher Parkraum oder als potentieller Parkraum klassifiziert wurde.

2. Verfahren gemäß Anspruch 1, bei dem zur Lokalisierung der Parklücke in einem autonomen Lokalisierungsmodus das Bereitstellen der Information (208) über die Parklücke erfolgt, wenn der Parkraum (310) als tatsächlicher Parkraum klassifiziert wurde.

3. Verfahren gemäß einem der vorangegangenen Ansprüche, bei dem das Trigger-Signal (202) ein Signal repräsentiert, dass durch eine Betätigung eines Schalters bereitgestellt wird.

4. Verfahren gemäß einem der vorangegangenen Ansprüche, bei dem die Information (204) über den ermittelten Parkraum (310) eine Information repräsentiert, die von einer Vorrichtung zur Parklückenlokalisierung bereitgestellt wird.

5. Verfahren gemäß einem der vorangegangenen Ansprüche, bei dem zwischen einem Zeitpunkt des Empfangens (102) des Trigger-Signals (202) und einem Zeitpunkt des Bereitstellens (108) der Information (208) über die Parklücke eine vorbestimmte Zeitdauer liegt.

6. Verfahren gemäß einem der vorangegangenen Ansprüche, bei dem die Information (204) über den ermittelten Parkraum (310) Daten über mindestens ein Objekt (314, 316) in einer Umgebung des Fahrzeugs umfasst.

7. Verfahren gemäß einem der vorangegangenen Ansprüche, bei dem der ermittelte Parkraum (310) als tatsächlicher Parkraum klassifiziert wird, wenn der ermittelte Parkraum mit einer ersten Wahrscheinlichkeit eine ausreichende Größe für das Fahrzeug umfasst, der ermittelte Parkraum als bedingt geeigneter Parkraum klassifiziert wird, wenn der ermittelte Parkraum mit einer zweiten Wahrscheinlichkeit eine ausreichende Größe für das Fahrzeug umfasst und bei dem der ermittelte Parkraum als ungeeigneter Parkraum klassifiziert wird, wenn der ermittelte Parkraum mit einer dritten Wahrscheinlichkeit eine ausreichende Größe für das Fahrzeug umfasst, wobei die erste Wahrscheinlichkeit größer als die zweite Wahrscheinlichkeit und die zweite Wahrscheinlichkeit größer als die dritte Wahrscheinlichkeit ist.

8. Verfahren gemäß einem der vorangegangenen Ansprüche, bei dem die Information (204) über den ermittelten Parkraum (310) eine Information über eine Tiefenreferenz und/oder ein parklückenbegrenzendes Objekt aufweist und bei dem die Klassifizierung unter Einbeziehung der Information über die Tiefenreferenz und/oder der Information über das parklückenbegrenzende Objekts durchgeführt wird.

9. Verfahren gemäß Anspruch 8, bei dem der ermittelte Parkraum (310) als bedingt geeigneter Parkraum klassifiziert wird, wenn die Tiefenreferenz zumindest über eine vorbestimmte Länge einer vorbestimmten Tiefenreferenz entspricht.

10. Verfahren gemäß einem der vorangegangenen Ansprüche, bei dem die Information (204) über den ermittelten Parkraum ansprechend auf das Trigger-Signal empfangen wird, wenn eine Positionsinformation anzeigt, dass sich das Fahrzeug an einem vorbestimmten Ort befindet.

11. Steuergerät (200), das ausgebildet ist, um die Schritte eines Verfahrens gemäß einem der Ansprüche 1 bis 8 durchzuführen.
